# EUROPÄISCHE PATENTSCHRIFT

(11) **EP 2 728 093 B1**
(45) Veröffentlichungstag und Bekanntmachung des Hinweises auf die Patenterteilung: **28.06.2017**
(21) Anmeldenummer: 13184441.7
(22) Anmeldetag: 13.09.2013
(51) Int. Cl.: E05B 77/06, E05B 77/12, E05B 81/90, E05B 81/54, E05B 81/76, B60R 21/01

(54) **Sicherheitssystem mit einem Unfallerkennungssensor**
Safety system with an accident detection sensor
Système de sécurité doté d'un capteur de détection d'accident

(30) Priorität: 18.09.2012 DE 102012018361; 07.05.2013 DE 102013104724
(43) Veröffentlichungstag der Anmeldung: 07.05.2014
(73) Patentinhaber: Huf Hülsbeck & Fürst GmbH & Co. KG, 42551 Velbert (DE)
(72) Erfinder: Witte, Martin, 48683 Ahaus (DE); Peschl, Andreas, 42555 Velbert (DE)
(74) Vertreter: Vogel, Andreas

(56) Entgegenhaltungen:
- EP-A2- 1 338 731
- EP-A2- 1 375 794
- WO-A1-79/00500
- WO-A1-2004/042177
- WO-A1-2005/087548
- DE-A1- 10 345 185
- DE-A1-102004 008 048
- DE-A1-102008 052 504
- DE-U1-202004 019 135

## Beschreibung

Die Erfindung betrifft ein Sicherheitssystem eines Kraftfahrzeuges, mit einem Schloss, das in mindestens zwei Zustände bringbar ist, um ein bewegliches Teil des Kraftfahrzeuges zu verriegeln und/oder zu entriegeln, einem Sensorelement, das durch einen Benutzer aktivierbar ist, um den Zustand des Schlosses zu beeinflussen, und einer Elektronikeinheit, die in einer Signalverbindung mit dem Schloss und dem Sensorelement ist.

Aus dem Stand der Technik ist es bekannt, ein Sensorelement am Kraftfahrzeug einzusetzen, das durch den Benutzer aktivierbar ist, um den Zustand eines Schlosses am Kraftfahrzeug zu beeinflussen. Der Benutzer kann über eine Aktivierung des Sensorelementes, welches z. B. ein Schalter sein kann, das Schloss zwischen einer Sicherungsstellung und einer Offenstellung bringen. In der Sicherungsstellung wird beispielsweise die Heckklappe oder die Tür des Kraftfahrzeuges gehalten, beispielsweise über ein Fallenelement, sodass eine Öffnung der Tür oder der Heckklappe verhindert ist. Beispielsweise kann in der Sicherungsstellung die Tür oder die Heckklappe verriegelt sein. Bei einem Wechsel des Zustandes in die Offenstellung ist die Tür oder die Heckklappe entriegelt, sodass ein Öffnungsvorgang der Tür oder der Heckklappe ausführbar ist. Das Sensorelement ist in Signalverbindung mit dem Schloss, sodass je nach Aktivierungszustand des Sensorelementes das Schloss elektronisch entsprechend angesteuert werden kann. Eine Elektronikeinheit begünstigt zudem eine zuverlässige Kommunikation zwischen dem Sensorelement und dem Schloss. Nachteiligerweise hat sich gezeigt, dass bei einer Unfallsituation die Schaltung bestehend aus Sensorelement, Elektronikeinheit und Schloss beeinflusst bzw. zerstört werden kann, wobei gleichzeitig ein Fehlsignal ausgelöst werden kann, bei dem das Schloss in den Zustand der Offenstellung bringbar ist, welches während der Unfallsituation jedoch dringend zu vermeiden ist.

Die Schrift EP 1 375 794 A2 offenbart ein Sicherheitssystem eines Fahrzeuges mit einem Schloss, das in mindestens zwei Zustände bringbar ist, um ein bewegliches Teil des Fahrzeuges zu verriegeln oder zu entriegeln. Es ist zudem ein im Normalzustand geöffneter Schalter vorgesehen, welcher mit Türgriffen des Fahrzeuges verbunden ist.

Die Schrift DE 20 2004 019 135 U1 zeigt ein Sicherheitssystem eines Kraftfahrzeuges mit einem Schloss, wobei das Schloss durch eine Steuerungseinrichtung angesteuert wird. Die Steuerungseinrichtung befindet sich nach einer Betätigung eines Türaußengriffes zunächst in einem Wartezustand. Erst danach, wenn der Türaußengriff auch betätigt worden ist, erfolgt eine Abfrage eines Crashsensors.

Die Aufgabe der vorliegenden Erfindung ist es, die oben genannten Nachteile zu vermeiden, insbesondere ein Sicherheitssystem zu schaffen, bei dem bei einer etwaigen eintretenden Unfallsituation nicht die Gefahr besteht, dass das bewegliche Teil des Kraftfahrzeuges, insbesondere die Heckklappe oder die Tür sich öffnet.

Die Aufgabe der vorliegenden Erfindung wird durch sämtliche Merkmale des Patentanspruches 1 gelöst. In den abhängigen Ansprüchen sind vorteilhafte Ausführungsformen ausgeführt.

Erfindungsgemäß ist ein Unfallerkennungssensor vorgesehen, dessen Funktionsweise derart ausgebildet ist, dass in einer Unfallsituation der Unfallerkennungssensor einen Zustandswechsel des Schlosses unterbindet. Ein wesentlicher Kern der Erfindung ist, dass der erfindungsgemäße Unfallerkennungssensor der Schaltung, zumindest sich zusammensetzend aus Sensorelement, Elektronikeinheit und Schloss, die Information zur Verfügung stellt und mitteilt, dass eine Unfallsituation vorliegt. Diese Information kann von der Schaltung nun derart verarbeitet werden, dass wirkungsvoll verhindert wird, dass das Schloss einen Zustandswechsel erfährt, insbesondere aus einer Sicherungsstellung, die es während des Betriebes des Kraftfahrzeuges einnimmt, in eine Offenstellung wechselt, bei der eine Entriegelung des beweglichen Teils vorliegt und somit ein Öffnungsvorgang des beweglichen Teils auslösbar ist. Ein Sicherheitssystem kann derart ausgeführt sein, dass der Unfallerkennungssensor in der Unfallsituation die Signalverbindung zum Schloss unterbricht, insbesondere die Signalverbindung zwischen dem Sensorelement und dem Schloss unterbricht. Die Unterbrechung der Signalverbindung bewirkt, dass kein Fehlsignal dem Schloss übermittelt werden kann, mit dem ein möglicher Zustandswechsel, der nicht gewollt ist, verbunden wäre. Die Unterbrechung der Signalverbindung kann z. B. zwischen dem Sensorelement und der Elektronikeinheit oder zwischen der Elektronikeinheit und dem Schloss vorliegen.

In einer möglichen Ausführungsform kann ein Schalter vorgesehen sein, der mit dem Unfallerkennungssenor in Signalverbindung steht, wobei in der Unfallsituation der Schalter die Signalverbindung zwischen dem Sensorelement und dem Schloss unterbricht und/oder derart in der Unfallsituation schaltet, dass ein Zustandswechsel des Schlosses unterbunden ist. Der Schalter kann zwischen dem Sensorelement und der Elektronikeinheit oder zwischen der Elektronikeinheit und dem Schloss geschaltet sein. Der Schalter ist beispielsweise als Wechsler oder als Öffner oder als ein Schließer ausführbar. Es kann vorgesehen sein, dass der Schalter im Unfallerkennungssensor integriert ist. Das bedeutet, dass der Unfallerkennungssensor mit dem Schalter die Funktion aufweist, die mögliche Unfallsituation zu erkennen und gleichzeitig im Falle einer Unfallsituation dafür zu sorgen, dass der Zustandswechsel des Schlosses verhindert wird. Hierdurch lässt sich die Anzahl der Baugruppen im Gesamtsicherheitssystem wesentlich reduzieren. Erfindungsgemäß umfasst die Erfindung, dass der Unfallerkennungssensor derart in Signalverbindung mit der Elektronikeinheit steht, dass in der Unfallsituation der Unfallerkennungssensor ein definiertes Signal der Elektronikeinheit übergibt, die das Schloss so ansteuert, dass das Schloss unverändert in seinem Zustand verbleibt, insbesondere dass das bewegliche Teil verriegelt verbleibt. Bei dieser Ausführungsform der Erfindung erfolgt keine unmittelbare Unterbrechung der Signalverbindung zum Schloss, sondern eine intelligente Informationsübergabe von einem oder mehreren Signalen, welches von der Elektronikeinheit ausgewertet wird. Die Elektronikeinheit kann anhand des definierten Signals erkennen, dass eine Unfallsituation vorliegt, sodass erfindungsgemäß die Elektronikeinheit das definierte Signal, welches charakteristisch für eine Unfallsituation ist, zwar an das Schloss elektronisch weiterleitet, dieses jedoch für einen Zustandswechsel nicht angesteuert wird.

Um eine kompakte Gesamtanordnung zu schaffen kann die Erfindung derart weitergebildet sein, dass der Unfallerkennungssensor im Sensorelement integriert ist. Das Schloss kann ein elektromechanisches Schloss sein, welches elektronisch durch die Elektronikeinheit und/oder durch die fahrzeugseitige Steuerung ansteuerbar ist. Das bedeutet, dass über ein Signal, ausgelöst durch die Aktivierung des Sensorelementes durch den Benutzer, das elektromechanische Schloss in seinen jeweiligen Zustand gebracht wird oder wechselt. Das Sensorelement kann ein Berührungssensor oder ein Annäherungssensor sein, insbesondere einen Piezosensor und/oder einen kapazitiven Sensor aufweisen.

Das Sicherheitssystem kann erfindungsgemäß derart ausgeführt sein, dass für eine tatsächliche Zustandsbeeinflussung des Schlosses eine Authentifizierungsabfrage gestartet wird. Das bedeutet, dass die Authentifizierungsabfrage überprüft, inwieweit der Benutzer, der das Sensorelement aktiviert, tatsächlich berechtigt ist, einen Zustandswechsel des Schlosses durchzuführen. Denkbar ist, dass eine Datenkommunikation zwischen einem Identifikationsgeber, den der Benutzer bei sich trägt, und einer kraftfahrzeugseitigen Sende-Empfangseinheit erfolgt. Liegt eine positive Authentifizierung vor, ist ein Zustandswechsel über das erfindungsgemäße Sicherheitssystem möglich.

In einer weiteren Ausführungsform der Erfindung kann der Unfallerkennungssensor in der Elektronikeinheit integriert sein. Des Weiteren ist es denkbar, dass die Elektronikeinheit, einschließlich des Unfallerkennungssensors oder ohne den Unfallerkennungssensor im Schloss bzw. am Schloss integriert ist. Somit können kompakte Baueinheiten innerhalb des Sicherheitssystems geschaffen werden, wodurch auch der Montageaufwand am Kraftfahrzeug wesentlich reduzierbar ist.

Beispielsweise ist es in einer weiteren Ausführungsform des erfindungsgemäßen Sicherheitssystems möglich, den Unfallerkennungssensor im oder am Schloss zu integrieren. Auch hier ergeben sich Vorteile bzgl. der Anzahl an Einzelkomponenten innerhalb des Sicherheitssystems.

Der Schalter, der mit dem Unfallerkennungssensor in Signalverbindung steht, kann ebenfalls im Schloss oder am Schloss mit integriert sein. Durch diese Maßnahme lässt sich die Anzahl der einzelnen Bauteile innerhalb des erfindungsgemäßen Sicherheitssystems wesentlich reduzieren.

Vorteilhafterweise kann das Kraftfahrzeug eine für den Benutzer zugängliche Handhabe aufweisen, insbesondere einen Türgriff, in dem das Sensorelement integriert ist, wobei insbesondere die Elektronikeinheit und/oder der Schalter und/oder der Unfallerkennungssensor in der Handhabe integriert ist. Das Sensorelement kann als Taster, Schalter, etc. ausgebildet sein, wobei vorteilhafterweise die Anordnung der genannten Bauteile innerhalb des Türgriffes bzw. innerhalb der Handhabe eine zuverlässige Funktionalität gewährleistet. Das bedeutet, dass durch eine Konzentration der soeben genannten Bauteile innerhalb der Handhabe sicher eine Unfallsituation erkannt werden kann und gleichzeitig innerhalb der Handhabe die erfindungsgemäße Schaltung geschaltet werden kann, um zu verhindern, dass das Schloss einen unerwünschten Zustandswechsel ausführt.

Des Weiteren ist vorteilhafterweise vorgesehen, dass das Schloss am beweglichen Teil angeordnet ist, wobei das bewegliche Teil eine Heckklappe oder eine Tür ist. Ebenfalls mit umfasst ist, dass das bewegliche Teil auch ein Tankdeckel des Kraftfahrzeugs sein kann, welches vom Schloss entriegelt bzw. verriegelt werden kann. Ebenfalls umfasst die Erfindung, dass der Unfallerkennungssensor ein Beschleunigungssensor und/oder ein Lagesensor ist. Der Unfallerkennungssensor kann ein Kontaktsensor oder auch ein Überschlagsensor sein, der ein Unfallereignis ermittelt und/oder sensiert. Ebenfalls ist es denkbar, dass der Unfallerkennungssensor des Airbag-Systems genutzt wird, um eine Unfallsituation zu detektieren. Als Unfallerkennungssensor ist erfindungsgemäß auch ein Verformungssensor einsetzbar, wobei bei einem Unfall ein Bereich des Kraftfahrzeuges verformt wird, den der Verformungssensor sensiert.

Des Weiteren kann die Erfindung vorsehen, dass der Unfallerkennungssensor derart mit dem Schloss geschaltet ist, dass in der Unfallsituation der Unfallerkennungssensor lediglich kurzzeitig einen Zustandswechsel des Schlosses unterbindet, insbesondere für weniger als 10 Millisekunden ein Zustandswechsel des Schlosses unterbunden ist. Nach Beendigung der Unfallsituation ist das Sicherheitssystem wieder in einem Normalmodus geschaltet, sodass der Benutzer auf übliche Weise das Sensorelement aktivieren kann, um einen Zustandswechsel des Schlosses zu erreichen.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Es zeigen:
- Fig.: eine schematische Darstellung eines Kraftfahrzeuges, das mit einem Sicherheitssystem ausgestattet ist, das eine Schaltung aufweist mit einem Schloss, einem Sensorelement, einer Elektronikeinheit sowie einem Unfallerkennungssensor,
- Fig. 2: eine mögliche Ausführungsform eines Sicherheitssystems,
- Fig. 3: eine weitere Alternative eines Sicherheitssystems gemäß Figur 1,
- Fig. 4a, b: ein weiteres Ausführungsbeispiel des Sicherheitssystems gemäß Figur 1 mit einem Schalter,
- Fig. 5 bis 10: mögliche Ausführungsvarianten eines Teilbereiches einer Schaltung, die gemäß Figur 1 einsetzbar ist,
- Fig. 11: eine schematische Darstellung einer möglichen Schaltung eines Sicherheitssystems mit einem Unfallerkennungssensor, der im Schloss integriert ist und
- Fig. 12: eine mögliche Ausführungsform des Sicherheitssystems mit einer Schaltung, bei der der Unfallerkennungssensor in der Handhabe integriert ist.

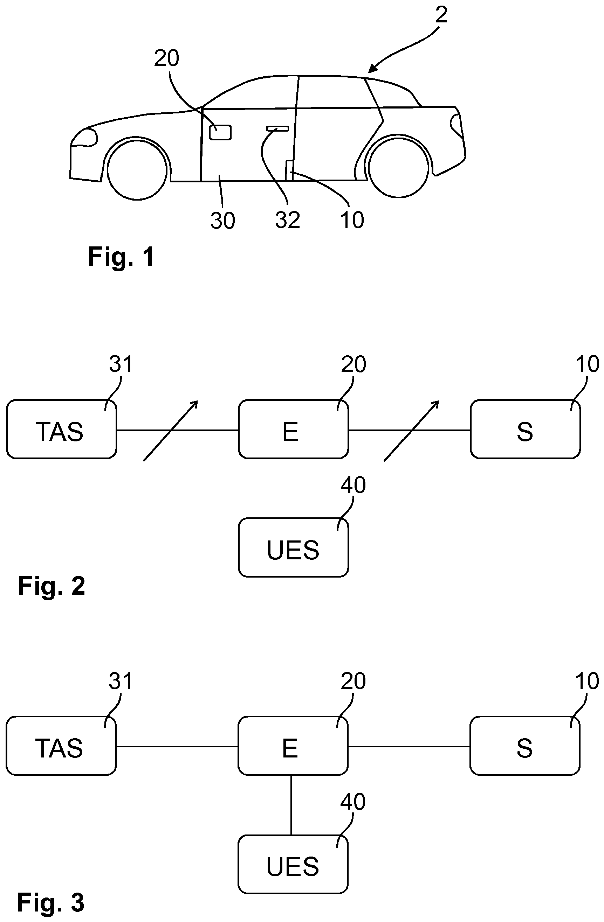

In Figur 1 ist ein Sicherheitssystem eines Kraftfahrzeuges 2 gezeigt, das ein Schloss 10 aufweist, das in mindestens zwei Zustände bringbar ist. In dem ersten Zustand befindet sich das Schloss 10 in einer Offenstellung, bei der ein bewegliches Teil 30 des Kraftfahrzeugs 2, insbesondere die Tür 30 vom Benutzer geöffnet werden kann. In einem zweiten Zustand des Schlosses 10 nimmt das Schloss 10 eine Sicherungsstellung ein, bei der die Tür 30 verriegelt ist und somit nicht durch den Benutzer geöffnet werden kann.

Das Kraftfahrzeug 2 weist des Weiteren eine Handhabe 32 auf, die im vorliegenden Ausführungsbeispiel als Türgriff ausgebildet ist. Die Handhabe 32 ist beabstandet zum Schloss 10 angeordnet. Das Schloss 10 ist elektronisch über ein Sensorelement 31 ansteuerbar, welches im dargestellten Ausführungsbeispiel in der Handhabe 32 integriert ist. Zudem weist das Sicherheitssystem eine Elektronikeinheit 20 auf, die in Signalverbindung mit dem Schloss 10 und dem Sensorelement 31 steht. Über eine manuelle Betätigung bzw. Aktivierung des Sensorelementes 31, kann der Benutzer den Zustand des Schlosses 10 beeinflussen, bzw. wechseln. Damit auch der Zustandswechsel innerhalb des Sicherheitssystems durchgeführt wird, erfolgt vorteilhafterweise eine Authentifizierungsabfrage, inwieweit der Benutzer berechtigt ist das Schloss 10 bzgl. seines Zustandes zu beeinflussen.

Gemäß der Figuren 2 bis 12 ist gezeigt, dass das Sicherheitssystem einen Unfallerkennungssensor 40 aufweist, dessen Funktionsweise derart ausgebildet ist, dass in einer Unfallsituation der Unfallerkennungssensor 40 einen Zustandswechsel des Schlosses 10 unterbindet. Gemäß Figur 2 ist der Unfallerkennungssensor 40 derart in der Schaltung des Sicherheitssystems integriert, dass in der Unfallsituation die Signalverbindung zum Schloss 10 vom Unfallerkennungssensor 40 unterbrochen wird. Beispielsweise ist es denkbar, dass die Signalverbindung zwischen dem Sensorelement 31 und der Elektronikeinheit 20 oder die Signalverbindung zwischen der Elektronikeinheit 20 und dem Schloss 10 unterbrochen wird.

Gemäß sämtlicher Ausführungsbeispiele hat die Elektronikeinheit 20 die Aufgabe mit dem elektromechanischen Schloss 10 zu kommunizieren, insbesondere in Datenkommunikation zu stehen, um entsprechend der Aktivierung des Sensorelementes 31 das Schloss 10 zu steuern.

In Figur 3 ist ein Ausführungsbeispiel des erfindungsgemäßen Sicherheitssystems gezeigt, bei dem der Unfallerkennungssensor 40 in einer Unfallsituation der Elektronikeinheit 20 ein definiertes Signal übermittelt. Die Elektronikeinheit 20 wertet das Signal des Unfallerkennungssensors 40 aus. Falls das vom Unfallerkennungssensor 40 ausgewertete Signal einem definierten Wert oder Schwellwert entspricht, welches für die Elektronikeinheit 20 bedeutet, dass tatsächlich ein Unfall vorliegt, verhindert die Elektronikeinheit 20, dass das Schloss 10 seinen Zustand verändert, insbesondere dass das Schloss 10 in einen derartigen Zustand gebracht wird, dass eine Entriegelung bzw. ein Öffnen der Tür 30 bewirkt werden kann.

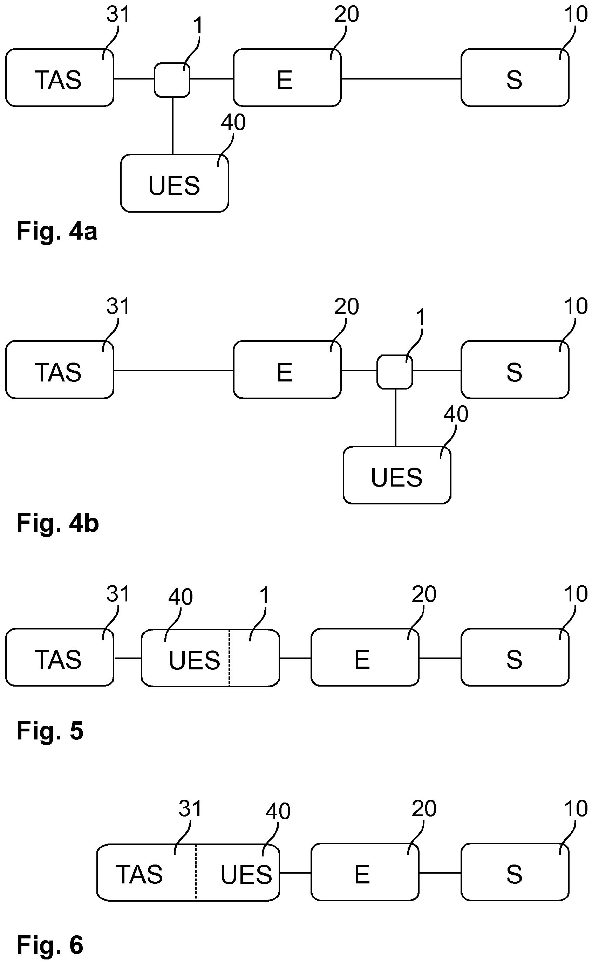

In Figur 4a ist das Ausführungsbeispiel des Sicherheitssystems gezeigt, bei dem ein Schalter 1 innerhalb der Schaltung integriert ist, der mit dem Unfallerkennungssensor 40 in Signalverbindung steht. Bei einer Unfallsituation unterbricht der Schalter 1 die Signalverbindung zwischen dem Sensorelement 31 und der Elektronikeinheit 20. Hierbei befindet sich der Schalter 1 zwischen dem Sensorelement 31 und der Elektronikeinheit 20. In Figur 4b ist eine weitere Alternative gezeigt, bei der der Schalter 1 zwischen der Elektronikeinheit 20 und dem Schloss 10 angeordnet sein kann. Der Schalter 1 gemäß Figur 4a, 4b kann auch derart ausgeführt sein, dass er in einer Unfallsituation so schaltet, dass ein Zustandswechsel des Schlosses 10 unterbunden ist. Beispielsweise kann der Schalter 1 ein Wechsler, ein Öffner oder ein Schließer sein.

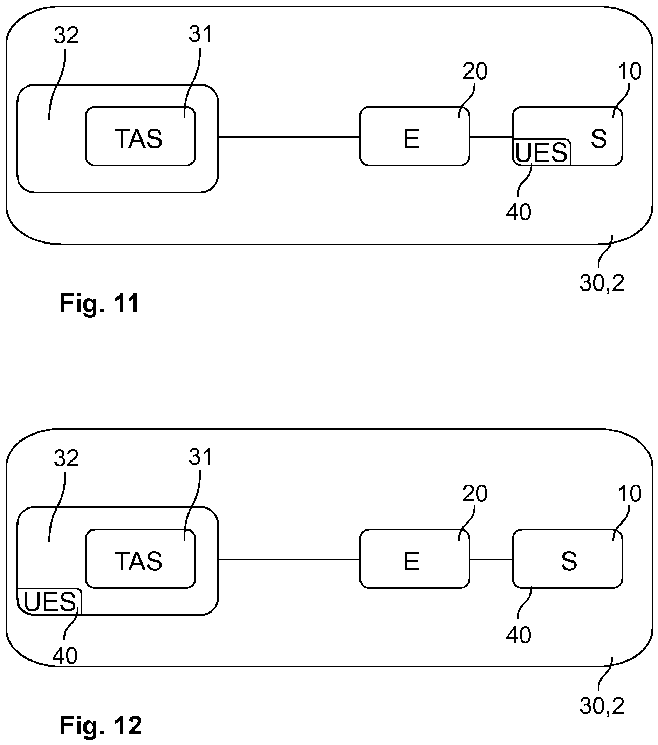

Gemäß Figur 11 und Figur 12 ist gezeigt, dass in der Handhabe 32, insbesondere im Türgriff das Sensorelement 31 integriert ist. Das Schloss 10 befindet sich an der Tür 30, beabstandet zur Handhabe 32. Zwischen der Handhabe 32 und dem Schloss 10 ist die Elektronikeinheit 20 angeordnet. Es ist nun denkbar, dass der Unfallerkennungssensor beispielsweise gemäß Figur 11 am Schloss 10 angeordnet sein kann. Ebenfalls ist es denkbar, dass der Unfallerkennungssensor gemäß Figur 12 in der Handhabe 32 integriert sein kann.

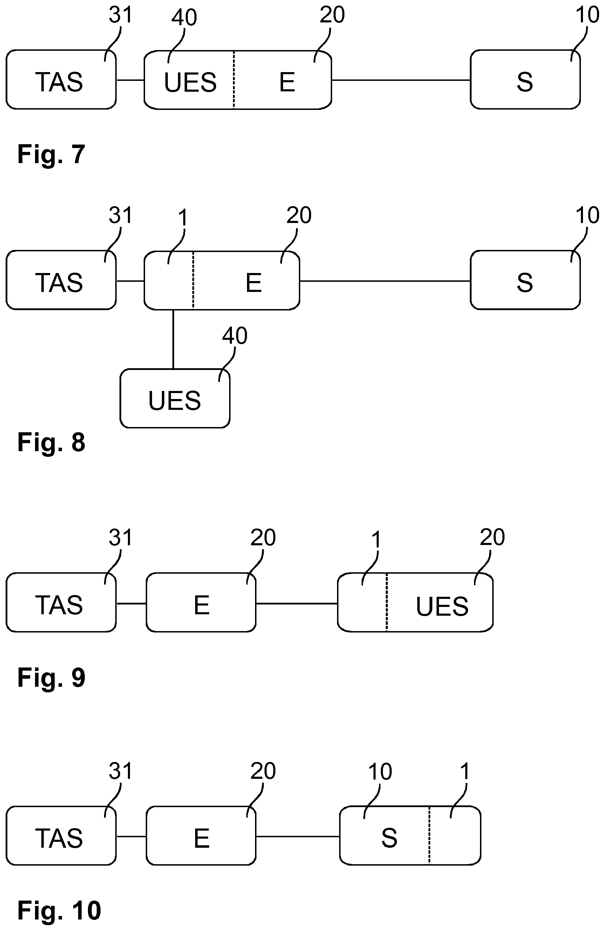

Die Ausführungsbeispiele gemäß Figur 1 bis Figur 4 sowie Figur 11 bis Figur 12 können nun in folgender Weise bzgl. der Merkmale variiert werden: Gemäß Figur 5 ist es beispielsweise denkbar, dass der Unfallerkennungssensor 40 mit dem Schalter 1 ein gemeinsames Bauteil bilden. Ebenfalls kann eine Alternative der Erfindung sein, den Unfallerkennungssensor 40 im Sensorelement 31 zu integrieren, welches in Figur 6 gezeigt ist. Figur 7 zeigt schematisch, dass der Unfallerkennungssensor 40 in der Elektronikeinheit 20 integriert sein kann. Die Figuren 8 bis Figur 10 zeigen, dass das Schloss 10 mit der Elektronikeinheit 20 und/oder mit dem Unfallerkennungssensor 40 und/oder mit dem Schalter 1 ein Bauteil bilden kann. Sämtliche Alternativen gemäß Figur 5 bis Figur 10 können in den Ausführungsbeispielen gemäß Figur 1 bis Figur 4 sowie Figur 11 bis Figur 12 kombiniert werden.

### Bezugszeichenliste

- 1: Schalter
- 2: Kraftfahrzeug

- 10: Schloss

- 20: Elektronikeinheit

- 30: bewegliches Teil, Tür
- 31: Sensorelement
- 32: Handhabe, Türgriff

- 40: Unfallerkennungssensor

## Patentansprüche

1. Sicherheitssystem eines Kraftfahrzeuges, mit
einem Schloss (10), das in mindestens zwei Zustände bringbar ist, um ein bewegliches Teil (30) des Kraftfahrzeuges (1) zu verriegeln und/oder zu entriegeln,
einem Sensorelement (31), das durch einen Benutzer aktivierbar ist, um den Zustand des Schlosses (10) zu beeinflussen,
einer Elektronikeinheit (20), die in einer Signalverbindung mit dem Schloss (10) und dem Sensorelement (31) ist,
wobei ein Unfallerkennungssensor (40) vorgesehen ist, dessen Funktionsweise derart ausgebildet ist, dass in einer Unfallsituation der Unfallerkennungssensor (40) einen Zustandswechsel des Schlosses (10) unterbindet,
**dadurch gekennzeichnet,**
**dass** der Unfallerkennungssensor (40) derart in Signalverbindung mit der Elektronikeinheit (20) steht, dass in der Unfallsituation der Unfallerkennungssensor (40) ein definiertes Signal der Elektronikeinheit (20) übergibt, die das Schloss (10) so ansteuert, dass das Schloss (10) unverändert in seinem Zustand verbleibt, wobei die Elektronikeinheit (20) das definierte Signal an das Schloss (10) elektronisch weiterleitet dieses jedoch für einen Zustandswechsel nicht angesteuert wird.

2. Sicherheitssystem nach Anspruch 1,
**dadurch gekennzeichnet,**
**dass** ein Schalter (1) vorgesehen ist, der mit dem Unfallerkennungssensor (40) in Signalverbindung steht, wobei in der Unfallsituation der Schalter (1) die Signalverbindung zwischen dem Sensorelement (31) und dem Schloss (10) unterbricht und/oder derart in der Unfallsituation schaltet, dass ein Zustandswechsel des Schlosses (10) unterbunden ist.

3. Sicherheitssystem nach Anspruch 2,
**dadurch gekennzeichnet,**
**dass** der Schalter (1) ein Wechsler oder ein Öffner oder ein Schließer ist.

4. Sicherheitssystem nach einem der vorhergehenden Ansprüche,
**dadurch gekennzeichnet,**
**dass** der Schalter (1) im Unfallerkennungssensor (40) integriert ist.

5. Sicherheitssystem nach einem der vorhergehenden Ansprüche,
**dadurch gekennzeichnet,**
**dass** der Unfallerkennungssensor (40) derart in Signalverbindung mit der Elektronikeinheit (20) steht, dass in der Unfallsituation der Unfallerkennungssensor (40) ein definiertes Signal der Elektronikeinheit (20) übergibt, die das Schloss (10) so ansteuert, dass das bewegliche Teil (30) verriegelt verbleibt.

6. Sicherheitssystem nach einem der vorhergehenden Ansprüche,
**dadurch gekennzeichnet,**
**dass** der Unfallerkennungssensor (40) im Sensorelement (31) integriert ist.

7. Sicherheitssystem nach einem der vorhergehenden Ansprüche,
**dadurch gekennzeichnet,**
**dass** der Unfallerkennungssensor (40) in der Elektronikeinheit (20) integriert ist.

8. Sicherheitssystem nach einem der vorhergehenden Ansprüche,
**dadurch gekennzeichnet,**
**dass** die Elektronikeinheit (20) im Schloss (10) integriert ist.

9. Sicherheitssystem nach einem der vorhergehenden Ansprüche,
**dadurch gekennzeichnet,**
**dass** der Unfallerkennungssensor (40) im Schloss (10) integriert ist.

10. Sicherheitssystem nach einem der vorhergehenden Ansprüche,
**dadurch gekennzeichnet,**
**dass** der Schalter (1) im Schloss (10) integriert ist.

11. Sicherheitssystem nach einem der vorhergehenden Ansprüche,
**dadurch gekennzeichnet,**
**dass** das Kraftfahrzeug (2) eine für den Benutzer zugängliche Handhabe (32) aufweist, insbesondere einen Türgriff (32), in dem das Sensorelement (31) integriert ist, wobei insbesondere die Elektronikeinheit (20) und/oder der Schalter (1) und/oder der Unfallerkennungssensor (40) in der Handhabe (32) integriert ist.

12. Sicherheitssystem nach einem der vorhergehenden Ansprüche,
**dadurch gekennzeichnet,**
**dass** das Schloss (10) am beweglichen Teil (30) angeordnet ist, wobei das bewegliche Teil (30) eine Heckklappe oder eine Tür ist.

13. Sicherheitssystem nach einem der vorhergehenden Ansprüche,
**dadurch gekennzeichnet,**
**dass** der Unfallerkennungssensor (40) ein Beschleunigungssensor und/oder ein Lagesensor ist.

14. Sicherheitssystem nach einem der vorhergehenden Ansprüche,
**dadurch gekennzeichnet,**
**dass** der Unfallerkennungssensor (40) derart mit dem Schloss (10) geschaltet ist, dass in der Unfallsituation der Unfallerkennungssensor (40) lediglich kurzzeitig einen Zustandswechsel des Schlosses (10) unterbindet, insbesondere für weniger als 10 Millisekunden ein Zustandswechsel des Schlosses (10) unterbunden ist.

## Claims

1. Safety system of a motor vehicle, with
a lock (10) which is transferable in at least two states, in order to lock and/or unlock a movable part (30) of the motor vehicle (1),
a sensor element (31) which is activatable by a user in order to influence the state of the lock (10),
an electronic unit (20) which is in a signal connection with the lock (10) and the sensor element (31),
wherein an accident recognition sensor (40) is intended which functionality is configured such that in an accident situation the accident recognition sensor (40) prevents a state change of the lock (10),
**characterized in that**
the accident recognition sensor (40) is in signal connection with the electronic unit (20), such that in the accident situation the accident recognition sensor (40) transfers a defined signal to the electronic unit (20), which controls the lock (10) such that the lock (10) remains unaltered in its state wherein the electronic unit (20) electronically transfers the defined signal to the lock (10), which however is not triggered for a state change.

2. Safety system according to claim 1 **characterized in that**
a switch (1) is intended, which is in signal connection with the accident recognition sensor (40), wherein in the accident situation the switch (1) disconnects the signal connection between the sensor element (31) and the lock (10) and/or is switched in the accident situation such that a state change of the lock (10) is prevented.

3. Safety system according to claim 2 **characterized in that**
the switch (1) is a changer, an opener or a closer.

4. Safety system according to one of the preceding claims **characterized in that** the switch (1) is integrated in the accident recognition sensor (40).

5. Safety system according to one of the preceding claims **characterized in that** the accident recognition sensor (40) is in signal connection with the electronic unit (20), such that in the accident situation the accident recognition sensor (40) transfers a defined signal of the electronic unit (20), which triggers the lock (10) such that the movable part (30) remains locked.

6. Safety system according to one of the preceding claims **characterized in that** the accident recognition sensor (40) is integrated in the sensor element (31).

7. Safety system according to one of the preceding claims **characterized in that** the accident recognition sensor (40) is integrated in the electronic unit (20).

8. Safety system according to one of the preceding claims **characterized in that** the electronic unit (20) is integrated in the lock (10).

9. Safety system according to one of the preceding claims **characterized in that** the accident recognition sensor (40) is integrated in the lock (10).

10. Safety system according to one of the preceding claims **characterized in that** the switch (1) is integrated in the lock (10).

11. Safety system according to one of the preceding claims **characterized in that** the vehicle (2) comprises a handle (32) accessible for the user, particularly a door handle (32), in which the sensor element (31) is integrated, wherein particularly the electronic unit (20) and/or the switch (1) and/or the accident recognition sensor (40) is integrated in the handle (32).

12. Safety system according to one of the preceding claims **characterized in that** the lock (10) is arranged at the movable part (30), wherein the movable part (30) is a hatch flap or a door.

13. Safety system according to one of the preceding claims **characterized in that** the accident recognition sensor (40) is an acceleration sensor and/or a position sensor.

14. Safety system according to one of the preceding claims **characterized in that** the accident recognition sensor (40) is operated with the lock (10), such that in the accident situation the accident recognition sensor (40) only prevents a short time state change of the lock (10), particularly for less than 10 milliseconds a state change of the lock is prevented.

## Revendications

1. Système de sécurité d'un véhicule à moteur, comprenant une serrure (10) qui peut être mise dans au moins deux états pour verrouiller et/ou déverrouiller une partie mobile (30) du véhicule à moteur (1),
un élément capteur (31) qui peut être activé par un utilisateur pour influencer l'état de la serrure (10),
une unité électronique (20) qui est en liaison de signalisation avec la serrure (10) et l'élément capteur (31),
dans lequel système est prévu un capteur de détection d'accident (40) dont le fonctionnement est conçu de sorte que, dans une situation d'accident, le capteur de détection d'accident (40) empêche un changement d'état de la serrure (10), **caractérisé en ce**
**que** le capteur de détection d'accident (40) est en liaison de signalisation avec unité électronique (20) de sorte que, dans la situation d'accident, le capteur de détection d'accident (40) délivre un signal défini à l'unité électronique (20), laquelle commande la serrure (10) de façon à ce que la serrure (10) reste inchangée dans son état, l'unité électronique (20) transmettant électroniquement le signal défini à la serrure (10), celle-ci n'étant toutefois pas commandée pour un changement d'état.

2. Système de sécurité selon la revendication 1,
**caractérisé en ce**
**qu'**un commutateur (1) est prévu, qui est en liaison de signalisation avec le capteur de détection d'accident (40), lequel commutateur (1) interrompt, dans la situation d'accident, la liaison de signalisation entre l'élément capteur (31) et la serrure (10) et/ou commute, dans la situation d'accident, de sorte à empêcher un changement d'état de la serrure (10).

3. Système de sécurité selon la revendication 2,
**caractérisé en ce**
**que** le commutateur (1) est un contact inverseur, un contact normalement fermé ou un contact normalement ouvert.

4. Système de sécurité selon l'une des revendications précédentes,
**caractérisé en ce**
**que** le commutateur (1) est intégré dans le capteur de détection d'accident (40).

5. Système de sécurité selon l'une des revendications précédentes,
**caractérisé en ce**
**que** le capteur de détection d'accident (40) est en liaison de signalisation avec l'unité électronique (20) de sorte que, dans la situation d'accident, le capteur de détection d'accident (40) délivre un signal défini à l'unité électronique (20), laquelle commande la serrure (10) de façon à ce que la partie mobile (30) reste verrouillée.

6. Système de sécurité selon l'une des revendications précédentes,
**caractérisé en ce**
**que** le capteur de détection d'accident (40) est intégré dans l'élément capteur (31).

7. Système de sécurité selon l'une des revendications précédentes,
**caractérisé en ce**
**que** le capteur de détection d'accident (40) est intégré dans l'unité électronique (20).

8. Système de sécurité selon l'une des revendications précédentes, **caractérisé en ce**
**que** l'unité électronique (20) est intégrée dans la serrure (10).

9. Système de sécurité selon l'une des revendications précédentes, **caractérisé en ce**
**que** le capteur de détection d'accident (40) est intégré dans la serrure (10).

10. Système de sécurité selon l'une des revendications précédentes, **caractérisé en ce**
**que** le commutateur (1) est intégré dans la serrure (10).

11. Système de sécurité selon l'une des revendications précédentes,
**caractérisé en ce**
**que** le véhicule à moteur (2) présente un élément de préhension (32) accessible à l'utilisateur, en particulier une poignée de porte (32), dans laquelle l'élément capteur (31) est intégré, en particulier l'unité électronique (20) et/ou le commutateur (1) et/ou le capteur de détection d'accident (40) étant intégrés dans l'élément de préhension (32).

12. Système de sécurité selon l'une des revendications précédentes, **caractérisé en ce**
**que** la serrure (10) est disposée sur la partie mobile (30), laquelle partie mobile (30) est un couvercle de coffre ou une porte.

13. Système de sécurité selon l'une des revendications précédentes,
**caractérisé en ce**
**que** le capteur de détection d'accident (40) est un capteur d'accélération et/ou un capteur de position.

14. Système de sécurité selon l'une des revendications précédentes, **caractérisé en ce**
**que** le capteur de détection d'accident (40) est couplé avec la serrure (10) de sorte que, dans la situation d'accident, le capteur de détection d'accident (40) empêche un changement d'état de la serrure (10) seulement brièvement, en particulier un changement d'état de la serrure (10) étant empêché pendant moins de 10 millisecondes.
